# EUROPÄISCHE PATENTSCHRIFT

(11) **EP 4 229 111 B1**
(45) Veröffentlichungstag und Bekanntmachung des Hinweises auf die Patenterteilung: **04.09.2024**
(21) Anmeldenummer: 21778494.1
(22) Anmeldetag: 22.09.2021
(51) Int. Cl.: C08G 59/14, C08G 59/18, C08G 59/32, C08G 59/40, C08G 59/50, C09D 163/00

(54) **MULTIFUNKTIONALE EPOXYD-SYSTEME UND DEREN ANWENDUNG**
MULTIFUNCTIONAL EPOXY SYSTEMS AND USE THEREOF
SYSTÈMES ÉPOXY MULTIFONCTIONNELS ET LEUR UTILISATION

(30) Priorität: 19.10.2020 DE 102020127468
(43) Veröffentlichungstag der Anmeldung: 23.08.2023
(73) Patentinhaber: Salewski, Werner, H., 23566 Lübeck (DE)
(72) Erfinder: BEHRENDT, Gerhard, 23566 Lübeck (DE)
(74) Vertreter: Gulde & Partner
(86) Internationale Anmeldenummer: PCT/EP2021/076027
(87) Internationale Veröffentlichungsnummer: WO 2022/083958

(56) Entgegenhaltungen:
- EP-A1- 0 171 198
- EP-A1- 3 536 725

## Beschreibung

Diese Erfindung betrifft UV-beständige, lösungsmittelfreie Zwei-Komponenten-Epoxyd-Systeme mit einstellbaren Verarbeitungstemperaturen, die durch Antifouling- und Korrosionsschutz-Eigenschaften charakterisiert sind und deren Verarbeitungs- und Härtungszeiten in einem großen Bereich eingestellt und die als Beschichtungsmittel, Klebstoffe, Penetriermittel, Dichtmassen oder Vergussmassen eingesetzt werden können. Die Erfindung befasst sich ferner mit der Anwendung der Zwei-Komponenten-Epoxyd-Systeme zur Herstellung von Beschichtungen, Vergussmassen oder Dichtmassen unter Formgebung.

Die Erfindung betrifft ein Zwei-Komponenten-Epoxyd-System, das ein Vorpolymerisat aus 75 bis 99,5 Teilen eines Di- und/oder Polyepoxids und 0,5 bis 25 Teilen einer Di- und/oder Polymercaptoverbindung; ein Amingemisch aus 5 bis 25 Teilen eines Mono- oder Di-sec-Amins und 75 bis 95 Teilen eines oder mehrerer primären Di- und/oder Polyamine mit 0,1 bis 20 Gew.-% darin dispergierten, nanoskaligen Oligoharnstoffen; und optional, weitere, feste oder flüssige Additive umfasst. Das Zwei-Komponenten-Epoxyd-System kann in Verfahren zur Herstellung von Beschichtungen, Vergussmassen oder Dichtmassen unter Formgebung Verwendung finden.

### Technologischer Hintergrund

Aufgrund ihrer chemischen Beständigkeit und ihrer thermo-mechanischen Eigenschaften sind Epoxidharze einer der am häufigsten verwendeten vernetzten Reaktionsharze. Epoxidharze bestehen in der Regel aus zwei Komponenten, der/den Epoxidverbindung/en und der Härterkomponente. Zusätzlich zu den Härtungsmitteln können katalytisch wirkende Verbindungen werden verwendet, um die Polymerisation der Epoxide durch katalytische Wirkung zu fördern. Die meisten der derzeit bei Epoxidharzen verwendeten Härter härten durch Polyadditionsreaktionen aus, die sowohl zur Kopplung als auch zur Vernetzung der Epoxidharzmoleküle führen. Die Art des Härters beeinflusst sowohl den Härtungsverlauf eines Epoxidharzsystems als auch die endgültigen Eigenschaften des Harzes. Zu den Aushärtungseigenschaften gehören z. B. die Topfzeit und die Dünnschichthärtungsgeschwindigkeit, während die Eigenschaften z. B. Härte, Glasübergangstemperatur und Zugfestigkeit umfassen. Zu den Härtungsmitteln gehören:
- Amine (aliphatisch, cycloaliphatisch oder aromatisch),
- modifizierte Amine,
- Mannich-Basen, einschließlich Phenalkaminen,
- Polymercaptane (bzw. Polythiole),
- Polyamide und Amidoamine.

Einige Epoxid-Systeme weisen über die guten mechanischen Eigenschaften hinaus zusätzliche Eigenschaften auf, z. B. Antifouling, sehr gute Adhäsion auf Substraten, Korrosionsschutz, Hemmung von Bewuchs mit Mikroorganismen auf Substraten oder Schichten, gute Penetrierbarkeit bei der Herstellung von Kompositen auch bei der Pultrusion etc.

So werden z. B. in der WO 2018/085 550 Adhäsionspromoter für Epoxid-Systeme auf der Basis von funktionalen Organosiloxanen beschrieben, wobei die Organosiloxane durch Epoxyid-, Mercapto-, oder Aminogruppen tragende Gruppen charakterisiert sind.

In der GB 2 163 754 werden z. B. Kohleteer-Epoxid-Systeme mit Acrylaten beschrieben, die einen hohen Korrosionsschutz aufweisen sollen.

Nach der Lehre der EP 3 693 426A1 werden bewuchshemmende Lackzusammensetzungen auf der Basis von Epoxiden und weiteren bis zu vier Komponenten erhalten, wenn Acrylate und Epoxide mit weiteren Komponenten, z. B. Acrylaten und/oder Polyurethanen derart formuliert werden, dass die für das Antifouling bzw. den Korrosionsschutz wirksamen Bestandteile mit einer gewünschten Geschwindigkeit ausgelaugt werden und dadurch diese Wirkungen erzielen.

Die DE 19 20 822 lehrt ein Verfahren zum Härten von Epoxydharzen mit Polyaminen, das dadurch charakterisiert ist, dass als Härter ein Gemisch aus
a) einem Umsetzungsprodukt aus Polyaminen und/oder Polyamiadoaminen mit einem Mono- oder Polyisocyanat und
b) gegebenenfalls Polyaminen und/oder Polyamidoaminen verwendet. Dadurch sollen bessere Verträglichkeiten und höhere Vernetzungsgrade bei gleichem Verarbeitungsspielraum ermöglicht werden. Es werden solche Härtungsmittel verwendet, bei denen die Komponente a) in einer Menge von 25 - 40 Gew.% vorliegt und aus einem Umsetzungsprodukt aus Mono- und/oder Polyisocyanaten und aliphatischen, araliphatischen, cycloaliphatischen und/oder heterocyclischen Polyaminen und
b) 75 - 6o Gew.% eines aliphatischen, araliphatischen, cycloaliphatischen und/oder heterocyclischen Polyamin, das mit dem unter a) verwendeten Amin identisch, aber auch von ihm verschieden sein kann, bestehen.

Die Herstellung des Umsetzungsproduktes als Komponente a) aus den Mono- und/oder Polyisocyanaten und Polyaminen wird durchgeführt, indem man die Isocyanate unter Feuchtigkeitsausschluss in das Polyamin bei Temperaturen von 20 bis 150°C, bevorzugt 50 80°C einrührt, wobei man nicht zu große Mengen auf einmal zugibt, damit örtliche Überschüsse vermieden werden. Es können auch beide Komponenten in Lösung in einer neutralen, inerten organischen Flüssigkeit verwendet werden, wobei sich insbesondere Dioxan als geeignet erwiesen hat. Nach der Herstellung der Addukte wird das Lösungsmittel wieder entfernt.

Nach dem Verfahren der DE 19 20 822 kann man ausgehärtete Epoxydharze erhalten, die eine ausgezeichnete Wasser-, Säure- und Chemikalienfestigkeit, guten Oberflächenglanz und teilweise sehr gute Elastizität besitzen. Sie sind gut geeignet zur Herstellung von großvolumigen Gießkörpern, z.B. für den Werkzeugbau. Sie können aber auch als Laminierharze, Klebstoffe, Kitte, als Kunstharzzement sowie als Beschichtungs-, Auskleidungs- und Reparaturmaterial für Betonfußböden und Betonrohre verwendet werden. Eine Verwendung der Epoxidharze für Antifouling- oder Korrosionsschutz-Mittel wurde nicht beschrieben.

Wesentlich für die Epoxidharz-Systeme im Falle des Einsatzes als Beschichtungen ist in vielen Fällen deren Glätte, z. B. bei Beschichtung von Schiffskörpern, siehe z. B. DE 35 30 771, die durch Verwendung von Lösungs- oder Verdünnungsmitteln oder durch den Auslaugungsprozess bei herkömmlichen Antifouling-Beschichtungen nicht gegeben ist.

Weiterhin ist bekannt, Deckanstrichmittel zum Anstreichen von Schiffsrümpfen mit hoher Glätte bei auslaugbaren aktiven Verbindungen dadurch zu erzielen, dass Beschichtungsmittel, enthaltend ein Pigment und ein filmbildendes Copolymers, das aus Einheiten mindestens eines Triorganozinnsalzes und einer olefinisch ungesättigten Carbonsäure und Einheiten mindestens eines olefinisch ungesättigten Comonomeren besteht, verwendet werden. Dieses Deckanstrichmittel ist dadurch gekennzeichnet, dass das
a) filmbildende Copolymere mehr als 50 bis zu 80 Gew.-% Einheiten mindestens eines Triorganozinnsalzes einer olefinisch ungesättigten Carbonsäure und zum restlichen Anteil Einheiten von mindestens einem olefinisch ungesättigten Comonomeren enthält,
b) dass als Pigment ein im wesentlichen meerwasserunlösliches metallhaltiges Pigment vorliegt, das zur Reaktion mit Meerwasser unter Bildung einer wasserlöslichen Metallverbindung befähigt ist, und
c) dass das Anstrichmittel zusätzlich ein hydrophobes organisches Verzögerungsmittel zum Verzögern der Ionenaustauschrate zwischen Meerwasser und dem Copolymeren (a) enthält, welches
   1) eine Löslichkeit in Meerwasser bei 25° C von nicht mehr als 5 Gewichtsteilen pro 1 Million Gewichtsteile hat und mit dem Copolymeren (a) mischbar ist,
   2) bei 25° C einen vernachlässigbar geringen Dampfdruck hat und
   3) in einer Menge von mindestens 5 Gew.-%, bezogen auf das Gewicht des Triorganozinn-Ionengehalts des Copolymeren (a) vorliegt, siehe DE 25 14 574 A1.

In der EP 2 621 996 A2 werden Epoxid-Harz-Systeme beschrieben, bei denen die A-Komponente, d. h. die Epoxid-Komponente, aus einem (aromatischen) Diepoxid und 1 - 5 Gew.-% eines aromatischen Diamins, d. h. einem Prepolymeren des Diepoxids, besteht.

Auch in der WO 98/31738 ist eine wärmehärtbare Harzzusammensetzung beschrieben, die umfasst ein polyfunktionelles Epoxyharz, das Glycidylgruppen enthält, einen Härter, einen oder mehrere Weichmacher und ein Epoxyaddukt auf der Basis langkettiger Fettsäuren, um einerseits eine hinreichende Elastizität und Flexibilität der Beschichtung und zum anderen niedrigere Härtungstemperaturen zu gewährleisten.

In der WO 2014/051241A1 werden vernetzende, thermisch härtbare Epoxid-Systeme mit guter Schlagzähigkeit beschrieben, die bestehen aus einer Epoxid-Verbindung mit zwei oder mehreren Epoxidgruppen pro Molekül, einem Härter für Epoxidharze und einem Härtungsbeschleuniger. Der Härter ist ein Gemisch hochmolekularer Thiolverbindungen, z. B. bestehend aus Trimethylolpropan-oxypropylen-tris(2-mercaptoglykolsäure) sowie einem di- bis tetrafunktionellen 2-Mercaptoglykolsäureester.

Die CN000105368269A lehrt die Herstellung von Korrosionsschutz-Epoxid-Harzen mit niedriger Härtungstemperatur, die bestehen aus (A) einem modifizierten Bisphenol-A-, einem Bisphenol-F- und einem aliphatischen Glycidolether sowie verschiedenen Additiven sowie (B) einem modifizierten Amin-Härter und einem Mercaptoamin-Härter, die zur Herstellung der Beschichtung vermischt werden.

In der DE 19 926 629 werden Epoxidharzhärter-Zusammensetzungen beschrieben, die mindestens einen Mercaptanhärter und mindestens ein Metallsalz von Carbonsäuren mit 8-24 C-Atomen enthalten. Diese Härter zeichnen sich insbesondere dadurch aus, dass Reaktionsharzmassen, die Epoxidharze und die erfindungsgemäßen Härter-Zusammensetzungen enthalten, bei der vernetzenden Härtung Formmassen - insbesondere Beschichtungen - mit sehr hohem Glanz ergeben. Als Mercaptanhärter (Polysulfidhärter) werden Härtungsmittel unterschiedlicher chemischer Struktur, zum Beispiel SH-terminierte Polysulfide, Mercaptoester und Mercaptoether für die Kalthärtung von Epoxidharzen bezeichnet. Der Begriff der "Mercaptanhärter" umfasst hier alle organischen Verbindungen mit ein oder mehreren Mercapto-gruppen, die sich zur Härtung von Epoxidharzen eignen. In einer Ausführungsform geschieht die Aushärtung der Epoxidharze zusätzlich in Gegenwart von aminischen und/oder amidischen Härtern.

Die EP 2 436 715A1 lehrt die Herstellung von Beschichtungszusammensetzungen auf Epoxidharzbasis bestehend aus einem Epoxidharz, einem Thiol-Härter und einem Härtungsbeschleuniger in Form von zwei Komponenten, wobei die Komponente (A) ein Epoxydharz und den Thiolhärter und die (B)-Komponente den Härtungsbeschleuniger enthält, wobei die flüssigen Komponenten unmittelbar vor der Anwendung vermischt werden. Der Thiol-Härter enthält eine verzweigte Verbindung mit einer Thiolgruppe, die ein Ester eines Polyalkohols mit einer eine Thiolgruppe enthaltenden Carbonsäure ist. Es wird darauf hingewiesen, dass bei der Zugabe des Polythiols zu der Epoxydharz-Zusammensetzung die Lagerstabilität vermindert wird wegen der hohen Reaktivität zwischen der Epoxid- und der Thiol-Verbindung. Durch tertiäre Amine als Härtungsbeschleuniger soll eine Disulfid-Bindung durch Reaktion mit Luftsauerstoff gebildet werden.

In der EP 0 171 198A1 werden härtbare Zusammensetzungen aus Epoxid- und Mercaptan-terminierten Polymeren beschrieben. Eines der Polymeren wird im stöchiometrischen Überschuss eingesetzt, so dass die Zusammensetzung entweder freie Epoxid- oder Mercaptan-Gruppen aufweist, die durch Härter mit freien funktionellen Gruppen gehärtet werden. Dabei sind die Mercaptan-terminierten Polymeren Polysulfide. Typische Addukte weisen Molmassen von etwa 1700 auf.

Die DE 102017105312 betrifft Thio-Epoxidharze, erhältlich aus der Umsetzung von zumindest Polyepoxid-Verbindungen aufweisend zwei Epoxid-Gruppen und aromatische und/oder cycloaliphatische Gruppen, aliphatischen Epoxid-Verbindungen und Polythiol-Verbindungen mit mindestens zwei Mercaptan-Gruppen, in Gegenwart von Carbonat-Verbindungen oder einem externen Treibmittel zur Herstellung von zelligen Polymeren für den Einsatz als Elastomere, Beschichtungen, Vergussmassen, Klebstoffe oder Schaumstoffe.

Die EP 3 536 725 A1 beschreibt biozide Beschichtungsmaterialien und ein dazugehöriges Herstellungsverfahren. Das Verfahren umfasst die Schritte:
(i) Bereitstellen einer Harnstoffamin-Komponente, erhältlich durch Umsetzung
   a) eines aliphatischen Di- oder Triisocyanats mit
   b) einem Gemisch aus einem ersten Amin mit einer primären oder sekundären Amingruppe und einem oder mehreren zweiten Amin(en) mit 2 oder mehr primären oder sekundären Amingruppen, wobei ein Verhältnis der Summe der primären und sekundären Amingruppen zu den Isocyanatgruppen 10 : 1 bis 2 : 1beträgt;
(ii) Bereitstellen einer Epoxid-Komponente, die einen oder mehrere aliphatische(n) polyfunktionelle(n) Glycidether umfasst; und
(iii) Umsetzen der Harnstoffamin-Komponente mit der Epoxid-Komponente, wobei ein Verhältnis der Epoxidgruppen der Epoxid-Komponente zu den Amingruppen der Harnstoffamin-Komponente 0,25 : 1 bis 1 : 0,25 beträgt.

Zur Herstellung der Beschichtungen oder Filme werden die Epoxid-Komponente und die Harnstoffamin-Komponente bei einer Temperatur von 5 bis 45°C miteinander innig vermischt. Über die verwendeten Amine, Additive und das Verhältnis der Epoxidgruppen zu den Amingruppen soll sich die Reaktionszeit der Systeme und deren Aushärtungsverhalten steuern lassen, so dass beispielsweise Reaktionszeiten von 3 Minuten bis 90 Minuten möglich sind. Das reagierende Gemisch wird nach einer Zeit von 1 Minute bis zu 1 Stunde mittels Rakel, Ziehmesser, Pflatschvorrichtung oder durch Eingabe in ein Rohrsystem mit nachfolgender Glättung durch einen Molch zu den erfindungsgemäßen Beschichtungen verarbeitet. Bei bestimmten Oberflächen ist vor der erfindungsgemäßen Beschichtung das Aufbringen eines Primers möglich.

Bisher wurden keine Epoxid-Systeme mit mehreren funktionellen Eigenschaften auf der Basis ausschließlich aliphatischer Verbindungen ohne Verwendung von Lösungsmitteln beschrieben. Solche Systeme werden gegenwärtig als "smart coatings", "smart sealants" oder "smart casts" bezeichnet.

Aufgabe der Erfindung ist es, UV-beständige, lösungsmittelfreie Zwei-Komponenten-Epoxyd-Systeme mit einstellbaren Verarbeitungstemperaturen, die durch Antifouling- und

Korrosionsschutz-Eigenschaften charakterisiert sind und deren Verarbeitungs- und Härtungszeiten in einem großen Bereich eingestellt werden können, zur Verfügung zu stellen.

### Zusammenfassung der Erfindung

Erfindungsgemäß wird die Aufgabe durch ein Zwei-Komponenten-Epoxyd-System nach Anspruch 1 gelöst. Das Zwei-Komponenten-Epoxyd-System umfasst:
ein Vorpolymerisat aus 75 bis 99,5 Teilen eines Di- und/oder Polyepoxids und 0,5 bis 25 Teilen einer Di- und/oder Polymercaptoverbindung;
ein Amingemisch aus 5 bis 25 Teilen eines Mono- oder Di-sec-Amins und 75 bis 95 Teilen eines oder mehrerer primären Di- und/oder Polyamine mit 0,1 bis 20 Gew.-% darin dispergierten, nanoskaligen Oligoharnstoffen; und
optional, weitere, feste oder flüssige Additive.

Das Zwei-Komponenten-Epoxyd-System ist UV-beständig und lösungsmittelfrei. Die Verarbeitungstemperaturen sind in einem moderaten Arbeitsbereich einstellbar. Das Zwei-Komponenten-Epoxyd-System zeigt Antifouling- und Korrosionsschutz-Eigenschaften und Verarbeitungs- und Härtungszeiten sind in einem großen Bereich einstellbar.

Ein weiterer Aspekt der Erfindung liegt in der Bereitstellung eines Verfahrens zur Herstellung von Beschichtungen, Vergussmassen oder Dichtmassen nach Anspruch 8. Nach dem Verfahren wird ein Vorpolymerisat aus 75 bis 99,5 Teilen eines Di- und/oder Polyepoxids und 0,5 bis 25 Teilen einer Di- und/oder Polymercaptoverbindung mit einem Amingemisch aus 5 bis 25 Teilen eines Mono- oder Di-sec-Amins und 75 bis 95 Teilen eines oder mehrerer primären Di- und/oder Polyamine mit 0,1 bis 20 Gew.-% darin dispergierten, nanoskaligen Oligoharnstoffen sowie in Gegenwart von ggf. weiteren festen oder flüssigen Additiven unter Formgebung umgesetzt.

Überraschend wurde demnach gefunden, dass stabile Prepolymere aus aliphatischen oder cycloaliphatischen Di- und/oder Polyepoxiden mit 0,5 bis 25 Teilen einer Di- und/oder Polymercaptoverbindung hergestellt werden können und durch den Anteil und die Art der Mercapto-verbindung im Gemisch sowohl die Viskosität des Prepolymeren als auch die Reaktionszeiten bei der Umsetzung mit Aminen eingestellt werden können.

Weiterhin wurde überraschend gefunden, dass besonders vorteilhaft bestimmte Amingemische mit einem Anteil von 0,1 bis 10 Gew.-% darin dispergierten, nanoskaligen Oligoharnstoffen zusätzliche Funktionen der daraus hergestellten Polymeren erzielen, insbesondere wenn die Teilchengröße der nanoskaligen Oligoharnstoffe im Bereich von 0,1 bis 20 nm liegt. Solche Oligohamstoff-Amin-Gemische sind prinzipiell in der EP 3 536 725 A1 beschrieben, jedoch beziehen diese sich auf Beschichtungen, die die Ausbildung eines Biofilms verhindern und nicht noch zusätzliche Funktionen aufweisen.

Die erfindungsgemäßen Oligoharnstoff-Komponenten haben inhärent biozide Eigenschaften, die durch den Austausch mit wässrigen Medien und ihrer Quarternisierung gegeben sind. Durch die quarternären Oberflächenladungen der erfindungsgemäßen Epoxid-Systeme werden langfristig auf deren Oberflächen keine Biofilme gebildet.

Die in den erfindungsgemäßen Epoxid-Systemen enthaltenen Verbindungen, die aus den Mercaptoverbindungen gebildet werden, können mit Metallatomen der Substrate in Wechselwirkung treten und somit stabile chemische Bindungen zwischen der Oberfläche des Epoxid-Systems und dem Polymer ausbilden. Dadurch ist ein Eindringen von Wasser- und Sauerstoff-Molekülen wesentlich erschwert, und eine Korrosion der Oberflächen kann nicht oder nur sehr stark erschwer stattfinden. In der Folge sind mit den erfindungsgemäßen Epoxid-Systemen geschützte Metalle mindestens zwei Jahre nachweislich vor Korrosion geschützt.

Weitere bevorzugte Ausgestaltungen der Erfindung lassen sich der nachfolgenden Beschreibung sowie den Unteransprüchen entnehmen.

### Detaillierte Beschreibung der Erfindung

Nachfolgend wird die Erfindung näher beschrieben, insbesondere anhand von Ausführungsbeispielen.

Das Zwei-Komponenten-Epoxyd-System umfasst ein Vorpolymerisat aus 75 bis 99,5 Teilen eines Di- und/oder Polyepoxids und 0,5 bis 25 Teilen einer Di- und/oder Polymercaptoverbindung; ein Amingemisch aus 5 bis 25 Teilen eines Mono- oder Di-sec-Amins und 75 bis 95 Teilen eines oder mehrerer Di- und/oder Polyamine mit 0,1 bis 20 Gew.-% darin dispergierten, nanoskaligen Oligoharnstoffen; und optional, weitere, feste oder flüssige Additive.

Gemäß dem Verfahren zur Herstellung von Beschichtungen, Vergussmassen oder Dichtmassen wird ein Vorpolymerisat aus 75 bis 99,5 Teilen eines Di- und/oder Polyepoxids und 0,5 bis 25 Teilen einer Di- und/oder Polymercaptoverbindung mit einem Amingemisch aus 5 bis 25 Teilen eines Mono- oder Di-sec-Amins und 75 bis 95 Teilen eines oder mehrerer Di- und/oder Polyamine mit 0,1 bis 20 Gew.-% darin dispergierten, nanoskaligen Oligoharnstoffen sowie in Gegenwart von ggf. weiteren festen oder flüssigen Additiven unter Formgebung umgesetzt.

Als geeignete aliphatische oder cycloaliphatische Di- oder Polyepoxide werden in erster Linie Glycidether verwendet. Wenn vorliegend die Bezeichnung 'Glycidether' verwendet wird, so sind hiermit sowohl Einzelverbindungen als auch Gemische derselben gemeint. Mit anderen Worten, der Glycidether kann zwei oder mehr Einzelverbindungen (aliphatische polyfunktionelle Glycidether) umfassen. Als polyfunktionelle Glycidether werden vorzugsweise Di-, Tri-, oder Tetraglycidether eingesetzt. Insbesondere ist der polyfunktionelle Glycidether ein Reaktionsprodukt eines Diols, Triols, Tetrols, Pentols, Hexols etc. mit Epichlorhydrin oder Glycidol nach bekannten Verfahren. Die Reaktionsprodukte stellen als handelsübliche Produkte in der Regel ein Gemisch aus Glycidethern unterschiedlicher Funktionalitäten dar. So enthält das Reaktionsprodukt von Trimethylolpropan und Epichlorhydrin sowohl den Monglycidether als auch den Diglycidether und den Triglycidether, das Reaktionsprodukt aus Pentaerythrit und Epichlorhydrin sowohl den Monglycidether als auch den Diglycidether, den Triglycidether und nur einen kleinen Anteil des Tetraglycidethers.

Weitere geeignete Glycidether sind u. a. Ethylenglykol-diglycidether, Diethylenglykoldiglycidether, Triethylenglykol-diglycidether, 1,2-Propylenglykol-diglycidether, 1,3-Propylenglykol-diglycidether, Polypropylenglycol-diglycidylether, Butandiol-1,4-diglycidether, Neopentylglykol-diglycidether, Hexandiol-1,6-diglycidether, Cyclohexandimethanoldiglycidether, Octandiol-1,8-diglycidether, Dodecan-1,12-diglycidether, Isosorbiddiglycidether, Glycerin-triglycidether, Trimethylolpropan-triglycidether, Pentaerythrittetragycidether, Pentaerythrit-triglycidether, Diglycerin-tetraglycidether, Dipentaerythrithexaglycidether, Xylitglycidether-Gemisch, und Dipentaerythrit-tetraglycidether, Sorbitglycidether.

Weiterhin sind Diepoxid-Verbindungen geeignet, z. B. epoxydierte Diolefine, Diene oder cyclische Diene, wie 1,2,5,6-Diepoxyhexan und 1,2,4,5-Diepoxycyclohexan, 3,4-Epoxycyclohexylmethyl-3,4-epoxy-cyclohexanecarboxylat, N,N-Diglycidyl-4-glycidyloxy-anilin, Vinylcyclohexen-dioxid, Dicyclopentadien-dioxid.

Außerdem können epoxidierte natürliche Stoffe verwendet werden, z. B. epoxidiertes Ricinusöl, epoxidiertes Sojaöl, epoxidiertes Cashew-Öl, mit zwei oder mehreren Epoxidgruppen eingesetzt werden.

Als Di- und/oder Polymercaptoverbindungen kommen in erster Linie aliphatische oder cycloaliphatische Verbindungen mit mindestens zwei Thiol-Gruppen, aber auch heterocyclische Verbindungen mit mindestens zwei Thiol-Gruppen in Betracht.

Beispiele für geeignete Di- und/oder Polymercaptoverbindungen sind Di- oder Polythiole mit mindestens zwei Mercapto-Gruppen, z. B. Alkylendithiol wie 1,2-Ethandithiol, 1,2-Propandithiol, 1,3-Propandithiol, 1,3-Butandithiol, 1,4-Butandithiol, 1,5-Pentandithiol, 1,6-Hexandithiol, Dipentendimercaptan, Ethylcyclohexyldithiol, Ester der Mercaptopropionsäure oder der Mercaptoessigsäure mit polyfunktionellen Alkoholen oder Ester der Thioglykolsäure mit polyfunktionellen Alkoholen. Bevorzugt werden solche Ester von Triolen, Tetrolen oder Hexolen, z. B. Trimethylolpropane-tri(3-mercaptopropionat), Pentaerythritol-tetra (3-mercaptopropionat), Ethylenglycol-di(3-mercaptopropionat), ethoxyliertes Trimethylolpropan-tri(3-mercaptopropionat), propoxyliertes Trimethylolpropan-tri(3-mercaptopropionate), Trimethylolpropane Tris(thioglycolate), Tris[2-(3-mercaptopropionyloxy)ethyl]isocyanurat, Dipentaerythritolhexa (3-mercapto-propionat), Trimethylolpropane-tri(3-mercaptoglykolat), Polycaprolacton-tetra(3-mercaptopropionat), Dipentaerythritol-hexakis(3-mercaptopropionat) etc.

Weitere Mercapto-Verbindungen sind solche vom Typ des 3,6-Dioxa-1,8-octandithiols, zu der u. a. gehören Bis(2-mercaptoethyl)ether oder Diethylenglycol-bis(2-mercaptoethyl)ether etc. sowie 3,7-Dithia-1,9-nonandithiol, 1,4-Butanediol-bis(thioglycolat) usw.

Zur Herstellung der Vorpolymerisate können 99,5 bis 75 Teile des sorgfältig getrockneten Di- und/oder Polyepoxids mit 0,5 bis 25 Teilen der sorgfältig getrockneten Di- und/oder Polymercaptoverbindung unter Rühren bei einer Temperatur von 0 bis 70°C gemischt und in Abhängigkeit von der Reaktivität der Mercapto-Verbindung zwischen 5 Minuten und 12 Stunden unter Stickstoff umgesetzt werden. Die Eigenschaften der Prepolymere - Viskosität, EpoxydÄquivalent etc. - werden danach bestimmt.

Die Vorpolymerisate können aus einem oder mehreren Polyepoxiden und A) einem Thioester wie Trimethylolpropane-tri(3-mercaptopropionat) und B) einem Dithiol des Typs 3,6-Dioxa-1,8-octandithiol oder ähnlichen Verbindungen, wie oben beschrieben, mit dem Ziel der Einstellung von mechanischen oder adhäsiven Eigenschaften im Verhältnis A : B wie 1 : 0,05 bis A : B wie 0,05 : 1, hergestellt werden. In Abhängigkeit von der Menge der Komponente B erreicht man eine Flexibilisierung der Beschichtungen, eine verbesserte Adhäsion auf Kunststoff-Oberflächen sowie eine höhere Schlagfestigkeit.

Das Amingemisch besteht zu
- 5 bis 25 Teilen aus einem oder mehreren Mono- oder Di-sec-Aminen und
- 95 bis 75 Teilen aus einem oder mehreren primären Di- und/oder Polyaminen.

Geeignete sekundäre Amine sind z. B. Di-n-butylamin, Di-sec-butylamin, N,N'-Bis-ethylhexan-1,6-diamin, N,N'-Bis-ethyl-2,2,4-methyl-hexan-1,6-diamin, N,N'-Bis-ethyl-2,4,4-methyl-hexan-1,6-diamin, N-Ethyl-N-cyclohexylamin, N,N'-Bis-ethyl-cyclohexan-1,6-diamin, Piperazin, Piperidin.

Geeignete primäre Di- und/oder Polyamine sind z. B. Ethylendiamin, Diethylentriamin, Triethylentetramin, Tetraethylenpentamin, 1,4-Diaminobutan, 1,3-Diaminobutan, 3-Methyl-1,6-hexandiamin, Hexamethylendiamin, 3-(n-Isopropylamino)-propylamin, N,N'-Diäthyl-1,3-propandlamln, Hexapropylenheptamin, Penta-(1-methylpropylen)-hexamin, Tetrabutylenpentamin, Hexa-(1,1 -dimethyläthylen)-heptamin, Di-(1-methylbutylen)-triamin, Pentaamylhexamin, 1-Amino-3-aminomethyl-3,5,5-trimethylcyclohexan (Isophorondiamin), 2,2-Bis(aminoethoxy)propan, 1,3-Cyclohexanebis(methylamin), 1,9-Diaminononan, 4,9-Dioxa-1,12-dodecanediamin, 2,2'-(Ethylenedioxy)bis(ethylamin), 4-Aminomethyl-1,8-octandiamin, 4,7,10-Trioxa-1,13-tridecanediamin, Tris(2-aminoethyl)amin, N,N-Dipropylentriamin, N2-Methyl-dipropylentriamin, N,N-Diethylentriamin, Tripropylentetramin, Triethylentetramin.

Die Alkylgruppen der Diamine können darüber hinaus auch durch eine ggf. substituierte Aminogruppe verbunden sein, wie beispielsweise in Bis-N,N-(3-aminopropyl)-N-methylamin, oder durch verzweigte aliphatische Gruppen substituiert sein, z. B. N,N'-Bis(sec-butylamino)-1,8-octylamin, N,N'-Bis(sec-butylamino)-1,6-hexylamin, N;N'-1,12-Bis(sec. butyl)dodecan-diamin, N,N'-Bis-(3,3-dimethylbutan-1,6-diamin.

Das Amingemisch soll erfindungsgemäß 0,1 bis 20 Gew.-% darin dispergierte, nanoskalige Oligoharnstoffe enthalten. Die Teilchengröße der nanoskaligen Oligoharnstoffe soll im Bereich von 0,1 bis 20 nm liegen, vorzugsweise zwischen 2 und 9 nm. Die Oligoharnstoffe können in einer vorgeschalteten Reaktion durch Umsetzungen z. B. von Urethanprepolymeren mit Aminen, von Aminen mit Isocyanaten, durch Aminolyse von Polyurethanen, insbesondere Weichschaumstoffen gewonnen werden. Bevorzugt wird eine in situ Synthese in dem definierten Amingemisch durch Umsetzung mit aliphatischen, cycloaliphatischen oder araliphatischen Diisocyanaten.

Im Falle der Variante der in situ - Herstellung der Oligoharnstoffe wird die Umsetzung derart durchgeführt, dass zunächst das Amingemisch in einem Reaktor hergestellt wird. Die Temperatur wird bei 0 bis 50°C eingestellt, vorzugsweise auf 10 bis 30°C und das Gemisch unter Rühren mit Stickstoff beschleiert. Die Umsetzung wird gestartet, indem bei sehr hoher Umdrehungszahl, z. B. bei 3000 bis 6000 min⁻¹, die berechnete Menge des Isocyanats in das Amingemisch zugegeben wird. Nach beendeter Zugabe wird das Gemisch schnell auf 140 bis 180°C bei weiter schnellem Rühren erwärmt, bis das Reaktionsgemisch klar ist und danach abgekühlt.

Geeignete Isocyanate für diese Verfahrensweise sind z. B. Isophorondiisocyanat (IPDI), 1,4-Cyclohexandiisocyanat, 1,3-Bis(isocyanatomethyl)cyclohexan, 1,6-Hexandiisocyanat, 1,5-Diisocyanato-2-methylpentan, 1,8-Diisocyanatooctan, 4,4'-Methylen-bis(cyclohexylisocyanat), 2,2,4-Trimethyl-1,6-diisocyanatohexan, 2,4,4-Trimethyl-1,6-diisocyanatohexan, 1,12-Diisocyanatododecane, 2-Ethylbutan-1,4-diisocyanat, Hexamethylendiisocyanat (HDI), Octadecyldiisocyanat, 1,3-Xylylendiisocyanat, 1,4-Xylylendiisocyanat, Tetramethyl-1,3-xylylendiisocyanat, Tetramethyl-1,4-xylylendiisocyanat oder Gemische davon.

In der Variante des Verfahrens, Oligoharnstoffe aus der Solvolyse von Polyurethanen, insbesondere Weichschaumstoffen, zu verwenden, wird folgendermaßen verfahren: In ein Amingemisch, bestehend aus Polyaminen mit primären Aminogruppen und Mono- oder Diaminen mit sekundären Aminogruppen, wie oben definiert, werden bei 120°C Flocken der Polyurethane mit einer derartigen Geschwindigkeit gegeben, wie sie der Lösevorgang erlaubt. Es wird ein Verhältnis von Amingemisch zu Polyurethan von 1 : 0,4 bis 0,3 : 1 (Gewichtsangaben) verwendet. Nach vollständiger Lösung der Polyurethane wird das Reaktionsgemisch schnell filtriert und auf ca. 70°C abgekühlt. Dabei bilden sich zwei Phasen, von denen die untere die Oligoharnstoffe darstellt. Diese wird abgetrennt, ggf. weiter in einem gleichen oder anderen Amingemisch gelöst und dieses verwendet. Die Teilchengröße der Oligoharnstoffe beträgt in Abhängigkeit von der Art der Polyurethane, der Amine und der Reaktionsbedingungen 8 bis 300 nm (Maximum der Teilchengrößenverteilung, gemessen mit Malvern Zetasizer bei 25°C).

In einer weiteren Variante des Verfahrens werden Polyurethan-Vorpolymerisate aminolysiert, um Oligoharnstoffe herzustellen. Dazu werden Vorpolymerisate durch Umsetzung eines oder mehrerer Diole, bevorzugt Diethylenglykol, Dipropylenglykol, Butan-1,4-diol und/oder Propan-1,3-diol, mit aliphatischen und oder cycloaliphatischen Diisocyanaten, wie oben definiert, im Verhältnis OH : NCO = 1 : 2,3 bis 1 : 3,5 hergestellt. Diese werden analog der Aminolyse von Polyurethanen in ein vorher erwärmtes Gemisch aus Aminen, wie oben definiert, eingetragen, weiter unter Rühren erwärmt, bis das Reaktionsgemisch optisch klar ist, abgekühlt und die Oligoharnstoffe von den weiteren Reaktionsprodukten abgetrennt und ggf. weiter in einem gleichen oder anderen Amingemisch gelöst und dieses verwendet. Die Teilchengröße der Oligoharnstoffe beträgt in Abhängigkeit von der Art der verwendeten Urethan-Vorpolymerisate, der Amine und der Reaktionsbedingungen 1,2 bis 25 nm (Maximum der Teilchengrößenverteilung, gemessen mit Malvern Zetasizer bei 25°C).

Geeignete Zusatzstoffe sind übliche Pigmente oder Füllstoffe, nach Möglichkeit als mikronisierte oder nanoskalige Stoffe. Weiterhin können flüssige Zusatzstoffe eingesetzt werden, z. B. Flammschutzmittel oder Weichmacher.

Bevorzugt werden als Zusatzstoffe nanoskalige Additive, z. B. nanoskalige Metalloxide, Metallhydroxide, Metalloxidhydroxide, Halbmetalloxide, Silikate, Schichtsilikate, oberflächenmodifizierte Schichtsilikate, Graphen, oberflächenmodifizierte Graphene, Kohlenstoff-Hohlfasern und modifizierte Kohlenstoff-Hohlfasern eingesetzt werden. Besonders bevorzugt sind nanoskalige, teilweise exfolierte Schichtsilikate wie Cloisite, Montmorillonite (ca. 1 nm starke Aluminosilikatschichten mit ggf. auf der Oberfläche substiutuierten Metallkationen) oder mit Oniumionen oberflächenmodifizierte Montmorillonite als Schichten, Käfige oder Röhren. Weiterhin geeignet sind Silikate wie Albit, auch Calcit (Calciumcarbonat) oder Dolomit (Calcium-Magnesium-Carbonat), geschichtete Doppelmetallhydroxide (Layered double metal hydroxides, LDH) oder Metalloxidhydroxide wie Böhmit.

Weitere Additive können Farbstoffe, Pigmente, feste oder flüssige Flammschutzmittel, Dispergierhilfsmittel, Verträglichkeitsvermittler, Verlaufmittel und Thixotropiermittel umfassen. Insbesondere als feste Pigmente werden Eisenoxide, Ruß, Titandioxid, Hämatit usw. eingesetzt, als Thixotropiermittel insbesondere Siliciumdioxid (pyrogene Kieselsäure) mit einer spezifischen Oberfläche von 90 bis 380 m²/g.

Die erfindungsgemäßen Komponenten werden entweder manuell oder maschinell verarbeitet. Dazu werden die Komponenten (a) und (b) ggf. unter Einarbeitung der genannten Additive in einem Verhältnis der reaktiven Gruppen von 0,5 bis 1,5 NH zu 1,5 bis 0,5 Oxiran, insbesondere im Verhältnis der reaktiven Gruppen von 0,75 bis 1,25 NH zu 1,25 bis 0,75 Oxiran, unter Rühren miteinander vermischt und unter Formgebung ausgehärtet. Formen können dabei Filme, Schichten, Vergüsse, Dichtungen, faser- oder teilchenverstärkte Gegenstände, penetrierte Fasermatten oder Faservliese etc. sein.

Die folgenden Beispiele erläutern die Erfindung, ohne deren Umfang einzugrenzen.

In den Beispielen bedeuten:
Aminzahl gemessen als mg KOH/g nach DIN 53176
Aminwasserstoff-Äquivalentgewicht (AHEW): aus der Aminzahl errechnetes Aminäquivalentgewicht dividiert durch die Aminwasserstoffzahl der Aminogruppe
Viskosität η gemessen bei 25°C mittels Haake Rheostress in mPas
Teilchengrößenverteilung gemessen bei 25°C mit Malvern Zetasizer
Glasübergangstemperaturen gemessen mit DSC (Netzsch DSC 214): Temperatur im Wendepunkt des Anstiegs der DSC-Kurve im Glasübergangsbereich

In den Beispielen werden folgende Ausgangsprodukte mehrmals verwendet:

### EP1:

In einem doppelwandigen, beheizbaren Reaktionsgefäß werden mittels Flügelrührer 475 g eines Polyepoxids, hergestellt aus Trimethylolpropan und Epichlorhydrin mit dem Epoxid-Äquivalent 143 g/Eq (epilox 13-30 der Leuna-Harze GmbH), mit 25 g Trimethylolpropantris-(3-mercaptopropionat) (Thiocure TMPMP der Bruno Bock Chemische Fabrik GmbH) gerührt und die Temperatur langsam auf 30°C erhöht. Bei dieser Temperatur wird weitere sechs Stunden gerührt und das klare, fast farblose Produkt abgefüllt.
Epoxid-Äquivalent: 155 g/Eq
Viskosität: 300 mPas

### EP2:

In einem doppelwandigen, beheizbaren Reaktionsgefäß werden mittels Flügelrührer 450 g eines Polyepoxids, hergestellt aus Trimethylolpropan und Epichlorhydrin mit dem Epoxid-Äquivalent 143 g/Eq (epilox 13-30 der Leuna-Harze GmbH), mit 50 g Trimethylolpropantris-(3-mercaptopropionat) (Thiocure TMPMP der Bruno Bock Chemische Fabrik GmbH) gerührt und die Temperatur langsam auf 30°C erhöht. Bei dieser Temperatur wird weitere sechs Stunden gerührt und das klare, fast farblose Produkt abgefüllt.
Epoxid-Äquivalent: 159,3 g/Eq
Viskosität: 366 mPas

### EP3:

In einem doppelwandigen, beheizbaren Reaktionsgefäß werden mittels Flügelrührer 450 g eines Polyepoxids, hergestellt aus Trimethylolpropan und Epichlorhydrin mit dem Epoxid-Äquivalent 143 g/Eq (epilox 13-30 der Leuna-Harze GmbH), mit 50 g Pentaerythrittetrakis-(3-mercaptopropionat) (Thiocure PETMP der Bruno Bock Chemische Fabrik GmbH) gerührt und die Temperatur langsam auf 35°C erhöht. Bei dieser Temperatur wird weitere sechs Stunden gerührt und das klare, fast farblose Produkt abgefüllt.
Epoxid-Äquivalent: 161 g/Eq
Viskosität: 1180 mPas

### EP4:

In einem doppelwandigen, beheizbaren Reaktionsgefäß werden mittels Flügelrührer 475 g eines Polyepoxids, hergestellt aus Trimethylolpropan und Epichlorhydrin mit dem Epoxid-Äquivalent 143 g/Eq (epilox 13-30 der Leuna-Harze GmbH), mit 25 g Pentaerythrittetrakis-(3-mercaptopropionat) (Thiocure PETMP der Bruno Bock Chemische Fabrik GmbH) gerührt und die Temperatur langsam auf 35°C erhöht. Bei dieser Temperatur wird weitere sechs Stunden gerührt und das klare, fast farblose Produkt abgefüllt.
Epoxid-Äquivalent: 156,6 g/Eq
Viskosität: 441 mPas

### EP5:

In einem doppelwandigen, beheizbaren Reaktionsgefäß werden mittels Magnetrührer 462,5 g eines Polyepoxids, hergestellt aus Trimethylolpropan und Epichlorhydrin mit dem Epoxid-Äquivalent 143 g/Eq (epilox 13-30 der Leuna-Harze GmbH), mit 37,5 g 3,6-Dioxa-1,8-octandithiol vier Stunden bei Umgebungstemperatur gerührt. Das Reaktionsprodukt wird über Nacht stehen gelassen und das klare, farblose Produkt abgefüllt.
Epoxid-Äquivalent: 156,5 g/Eq
Viskosität: 299 mPas
Aminhärter AV 70 mit 17 Gew.-% Oligoharnstoffteilchen

In ein doppelwandiges, beheizbares Reaktionsgefäß von 2,5 l Inhalt werden 1380 g Isophorondiamin (Baxxodur EC 201 der BASF SE) und 15 g Di-n-butylamin unter einer Stickstoff-Schutzschicht gegeben und ein Scheibenrührer mit 2000 min⁻¹ gestartet. Bei 19°C werden durch eine Lanze 285 g Isophorondiisocyanat innerhalb von 4 Minuten zugegeben. Die Temperatur steigt dabei auf 42°C. Nach beendeter Zugabe wird das Reaktionsgemisch auf 164°C erwärmt und 6,5 Minuten bei dieser Temperatur mit 2000 min⁻¹ gerührt. Danach wird auf 60°C abgekühlt und in Vorratsgefäße abgefüllt.
Aminzahl: 454 mg KOH/g
Viskosität: 5110 mPas
Maximum der Teilchengrößenverteilung: 6,4 nm
Aminhärter AR 44 mit 11 Gew.-% Oligoharnstoffteilchen

In ein doppelwandiges, beheizbares Reaktionsgefäß von 2,5 l Inhalt werden 110 g Di-n-butylamin (Performance Chemicals HGmbH) und 130 g N,N'-Bis-ethyl-2,4,4-methyl-hexan-1,6-diamin (Performance Chemicals HGmbH) vorgelegt und unter Rühren mit einem Propellerrührer (zunächst 200 min⁻¹, im Reaktionsverlauf gesteigert bis auf 600 min⁻¹) auf 130°C erwärmt. Bei dieser Temperatur werden durch eine Feststoff-Schleuse 1250 g Flocken eines PUR-Kaltform-Weichschaumstoffs (Takata Ltd.) innerhalb von 22 Minuten zugegeben. Danach wird die Temperatur auf 145°C erhöht und unter schnellem Rühren 30 Minuten gehalten. Das Reaktionsgemisch wird nach Abkühlung auf 85°C in einen Glaskolben mit Bodenventil gegeben und nach Phasentrennung bei 68°C die untere Phase (ca. 330 g) unter Rühren in einen Kolben abgelassen und bei dieser Temperatur gehalten. 22 g des flüssigen Oligoharnstoff-Gemisches werden bei 70°C zu 178 g eines Gemisches aus 28 g Bis-N,N-(3-aminopropyl)-methylamin und 150 g 4-Aminomethyl-1,8-octandiamin (Hexatran^{™} 100 der Ascend Performance Materials) unter schnellem Rühren gegeben. Es wird zwei Stunden bei einer langsam bis auf 135°C gesteigerten Temperatur gerührt und danach unter Stickstoff in Vorratsbehälter abgefüllt.
Aminzahl: 491,4 mg KOH/g
Viskosität: 9880 mPas
Maximum der Teilchengrößenverteilung: 17,7 nm
Aminhärter AS 32 mit 12 Gew.-% Oligoharnstoffteilchen

### (a) Herstellung des Vorpolymerisates

In ein doppelwandiges, beheizbares Reaktionsgefäß von 2,5 l Inhalt schnell laufendem Propellerrührer und Stickstoff-Begasung werden 670 g 4,4'-Methylen-bis(cyclohexyl-isocyanat) (Performance Chemicals HGmbH) vorgelegt und auf 65°C unter Rühren erwärmt. Bei dieser Temperatur werden 265 g Dipropylenglykol (Performance Chemicals HGmbH) derart zugegeben, dass die Temperatur 75°C nicht übersteigt. Die Zugabe dauert ca. 1,5 Stunden. Danach wird auf Umgebungstemperatur abgekühlt. Es wurde ein hellgelbes, viskoses Vorpolymerisat erhalten.

### (b) Herstellung der Oligoharnstoffe

In ein doppelwandiges, beheizbares Reaktionsgefäß von 2,5 l Inhalt schnell laufendem Propellerrührer und Stickstoff-Begasung werden 875 g Isophorondiamin (Baxxodur EC 201 der BASF SE) und 125 g 4-Aminomethyl-1,8-octandiamin (Hexatran^{™} 100 der Ascend Performance Materials) gegeben und auf 110°C erwärmt. Unter schnellem Rühren werden 158 g des Vorpolymerisates derart hinzugegeben, dass die Temperatur 130°C nicht übersteigt. Nach beendeter Zugabe wird noch eine Stunde bei 120°C gerührt, danach auf 45°C abgekühlt und in Vorratsbehälter abgefüllt.
Aminzahl: 448,3 mg KOH/g
Viskosität: 2430 mPas
Maximum der Teilchengrößenverteilung: 4,3 nm

### Beispiel 1

### Herstellung einer erfindungsgemäßen Beschichtung

31g des modifizierten Epoxids EP1 werden mit 12,5 g des Aminhärters AV 70 innerhalb von 5 Minuten mit einem mechanischen Scheibenrührer intensiv vermischt. Das Gemisch wird auf einem Matis-LabCoater auf Silikon-Trennpapier als 300 µm starke Schicht ausgezogen und 3 Stunden bei 60°C gehärtet.

Der verbleibende Rest des Reaktionsgemisches wird auf ein Eisenblech gegossen und zu einer 200 µm starken Schicht ausgestrichen. Die Topfzeit des Gemisches beträgt ca. 90 Minuten. Die Schicht ist nach 6,5 Stunden klebfrei.

Die Folie wird mittels DSC gemessen und der Glasübergang mit 84°C bestimmt.

Das beschichtete Eisenblech wird in einer Versuchsstation in einem Binnengewässer in die dortigen Rahmen eingesetzt. Es werden wöchentlich der Bewuchs und die Korrosion des Blechs kontrolliert. Nach 6 Monaten wurde kein Bewuchs festgestellt, die Rückseite des Blechs war stark korrodiert, die beschichte Seite unverändert.

### Beispiel 2

### Herstellung einer erfindungsgemäßen Vergussmasse

16 g des modifizierten Epoxids EP2 werden mit 6,0 g des Aminhärters AV 70 innerhalb von 5 Minuten mit einem mechanischen Scheibenrührer intensiv vermischt. Das reagierende Gemisch kann innerhalb 15 Minuten verarbeitet werden (Topfzeit). Nach 12 Minuten wird das Gemisch in eine Form gegeben und bei 130°C innerhalb 3 Stunden ausgehärtet.
Glasübergang: 77°C
Shore-D-Härte: 38
Charpy Schlagzähigkeit nach DIN EN ISO 179-1: 6,3 kJ/m²

### Beispiel 3

### Herstellung einer erfindungsgemäßen Dichtmasse

16,1 g des modifizierten Epoxids EP3 werden mit 6,0 g Aminhärter AR 44 innerhalb von 5 Minuten mit einem mechanischen Scheibenrührer intensiv vermischt. Das reagierende Gemisch kann innerhalb 45 Minuten verarbeitet werden (Topfzeit). Nach 20 Minuten wird das Gemisch zwischen eine Aluminium- und eine Eisenblechplatte gegeben. Das System wird 3 Stunden bei 130°C gehärtet.
Glasübergang: 84°C
Abreißfestigkeit: 34 kN

### Beispiel 4

### Herstellung einer erfindungsgemäßen Vergussmasse

16,1 g des modifizierten Epoxids EP3 werden mit 6,2 g Aminhärter AS 32 innerhalb von 5 Minuten mit einem mechanischen Scheibenrührer intensiv vermischt. Das reagierende Gemisch kann innerhalb 50 Minuten verarbeitet werden (Topfzeit). Nach 20 Minuten wird das Gemisch in eine offene Form als 12 mm Schicht gegeben und 3 Stunden bei 130°C gehärtet.
Glasübergang: 71°C
Shore-D-Härte: 31
Charpy Schlagzähigkeit nach DIN EN ISO 179-1: 7,8 kJ/m²

### Beispiel 5

### Herstellung einer erfindungsgemäßen Vergussmasse

31g des modifizierten Epoxids EP2 werden mit 12,5 g des Aminhärters AV 70 und 5 g Cloisite-116 (BYK-Chemie GmbH), einem organophilen, mikronisierten Schichtsilikat, innerhalb von 5 Minuten mit einem mechanischen Scheibenrührer intensiv vermischt. Das reagierende Gemisch kann innerhalb 10 Minuten verarbeitet werden (Topfzeit). Nach 7 Minuten wird das Gemisch in eine offene Form als 12 mm Schicht gegeben und 3 Stunden bei 130°C gehärtet.
Glasübergang: 93 °C
Shore-D-Härte: 40
Charpy Schlagzähigkeit nach DIN EN ISO 179-1: 3,4 kJ/m²

### Beispiel 6

### Herstellung einer erfindungsgemäßen Vergussmasse

31g des modifizierten Epoxids EP3 werden mit 12,5 g des Aminhärters AV 70 und 5 g Disperal P2 (Sasol Chemie GmbH), einem modifizierten synthetischen Boehmit mit einer nominellen Teilchengröße von 20 nm, innerhalb von 5 Minuten mit einem mechanischen Scheibenrührer intensiv vermischt. Das reagierende Gemisch kann innerhalb 30 Minuten verarbeitet werden (Topfzeit). Nach 7 Minuten wird das Gemisch in eine offene Form als 8 mm Schicht gegeben und 3 Stunden bei 130°C gehärtet.
Glasübergang: 96°C
Shore-D-Härte: 450
Charpy Schlagzähigkeit nach DIN EN ISO 179-1: 3,0 kJ/m²

### Beispiel 7

31,3 g des modifizierten Epoxids EP5 werden mit 25 g des Aminhärters AS 32 innerhalb von 5 Minuten mit einem mechanischen Scheibenrührer intensiv vermischt. Das reagierende Gemisch kann innerhalb 40 Minuten verarbeitet werden (Topfzeit). Nach 10 Minuten wird das Gemisch in eine offene Form als 0,2 mm Schicht gegeben und 3 Stunden bei 130°C gehärtet.
Glasübergang: 26°C
Shore-A-Härte: 35
Charpy Schlagzähigkeit nach DIN EN ISO 179-1: 2,1 kJ/m²

### Beispiel 8

15,7 g des modifizierten Epoxids EP5 und 15,5 g des modifizierten Epoxids EP2 werden mit 25 g des Aminhärters AS 32 innerhalb von 5 Minuten mit einem mechanischen Scheibenrührer intensiv vermischt. Das reagierende Gemisch kann innerhalb 45 Minuten verarbeitet werden (Topfzeit). Nach 10 Minuten wird das Gemisch in eine offene Form als 0,2 mm Schicht gegeben und 3 Stunden bei 130°C gehärtet.
Glasübergang: 55°C
Shore-A-Härte: 58
Charpy Schlagzähigkeit nach DIN EN ISO 179-1: 4,8 kJ/m²

### Beispiel 9

0,157 g des modifizierten Epoxids EP5 und 13,9 g des modifizierten Epoxids EP2 werden mit 22,5 g des Aminhärters AS 32 innerhalb von 5 Minuten mit einem mechanischen Scheibenrührer intensiv vermischt. Das reagierende Gemisch kann innerhalb 40 Minuten verarbeitet werden (Topfzeit). Nach 10 Minuten wird das Gemisch in eine offene Form als 0,2 mm Schicht gegeben und 3 Stunden bei 130°C gehärtet.
Glasübergang: 75°C
Shore-D-Härte: 51
Charpy Schlagzähigkeit nach DIN EN ISO 179-1: 5,4 kJ/m²

## Patentansprüche

1. Zwei-Komponenten-Epoxyd-System, umfassend:
ein Vorpolymerisat aus 75 bis 99,5 Teilen eines Di- und/oder Polyepoxids und 0,5 bis 25 Teilen einer Di- und/oder Polymercaptoverbindung;
ein Amingemisch aus 5 bis 25 Teilen eines Mono- oder Di-sec-Amins und 75 bis 95 Teilen eines oder mehrerer primären Di- und/oder Polyamine mit 0,1 bis 20 Gew.-% darin dispergierten, nanoskaligen Oligoharnstoffen; und
optional, weitere, feste oder flüssige Additive.

2. Zwei-Komponenten-Epoxyd-System nach Anspruch 1, **dadurch gekennzeichnet, dass** die Di- und/oder Polymercaptoverbindungen zur Herstellung des Vorpolymerisats ausgewählt sind aus der Gruppe bestehend aus Ester der Thioglykolsäure, der Thioessigsäure oder der Mercaptopropionsäure mit aliphatischen Hydroxylverbindungen, die mindestens zwei Hydroxylgruppen aufweisen.

3. Zwei-Komponenten-Epoxyd-System nach Anspruch 1, **dadurch gekennzeichnet, dass** die Di- und/oder Polymercaptoverbindungen ausgewählt sind aus der Gruppe bestehend aus 3,6-Dioxa-1,8-octandithiols, Bis(2-mercaptoethyl)ether und Diethylenglycol-bis(2-mercaptoethyl)ether.

4. Zwei-Komponenten-Epoxyd-System nach Anspruch 1, **dadurch gekennzeichnet, dass** Vorpolymerisat hergestellt ist durch Umsetzung von (a) einem oder mehreren Polyepoxyden mit einer oder mehreren polyfunktionellen Estern der Mercaptopropionsäure oder (b) einem oder mehreren Polyepoxyden mit einer oder mehreren Bis-thiol-Verbindung ausgewählt aus der Gruppe bestehend aus Bis(2-mercaptoethyl)ether, Diethylenglycol-bis(2-mercaptoethyl)ether, 3,7-Dithia-1,9-nonandithiol und 1,4-Butanediol-bis(thioglycolat) jeweils im Verhältnis 1 : 0,05 bis 0,05 : 1.

5. Zwei-Komponenten-Epoxyd-System nach Anspruch 1, **dadurch gekennzeichnet, dass** die Oligoharnstoffe im Amingemisch hergestellt sind durch
a) in situ Umsetzung mit aliphatischen, cycloaliphatischen oder aralphatischen Diisocyanaten;
b) Solvolyse von Polyurethanen; oder
c) Aminolyse von Polyurethan-Vorpolymerisaten.

6. Zwei-Komponenten-Epoxyd-System nach Anspruch 1, **dadurch gekennzeichnet, dass** das Amingemisch aus mindestens einem primären Diamin und mindestens einem sekundären Mono- oder Diamin besteht.

7. Zwei-Komponenten-Epoxyd-System nach Anspruch 1, **dadurch gekennzeichnet, dass** die Additive nanoskalige feste Materialien umfassen.

8. Verfahren zur Herstellung von Beschichtungen, Vergussmassen oder Dichtmassen, **dadurch gekennzeichnet, dass** ein Vorpolymerisat aus 75 bis 99,5 Teilen eines Di- und/oder Polyepoxids und 0,5 bis 25 Teilen einer Di- und/oder Polymercaptoverbindung mit
einem Amingemisch aus 5 bis 25 Teilen eines Mono- oder Di-sec-Amins und 75 bis 95 Teilen eines oder mehrerer primären Di- und/oder Polyamine mit 0,1 bis 20 Gew.-% darin dispergierten, nanoskaligen Oligoharnstoffen
sowie in Gegenwart von ggf. weiteren festen oder flüssigen Additiven unter Formgebung umgesetzt wird.

9. Verfahren nach Anspruch 8, **dadurch gekennzeichnet, dass** Gemische aus Epoxidverbindungen bei Temperaturen von 10 bis 70°C mit einer oder mehreren Polymercaptoverbindungen zu einem lagerstabilen Vorpolymerisat umgesetzt werden.

10. Verfahren nach Anspruch 9, **dadurch gekennzeichnet, dass** als Di- und/oder Polymercaptoverbindungen Ester der Thioglykolsäure, der Thioessigsäure oder der Mercaptopropionsäure mit aliphatischen Hydroxylverbindungen, die mit mindestens zwei Hydroxylgruppen aufweisen, eingesetzt werden.

11. Verfahren nach Anspruch 9, **dadurch gekennzeichnet, dass** als Di- und/oder Polymercaptoverbindungen 3,6-Dioxa-1,8-octandithiols, Bis(2-mercaptoethyl)ether oder Diethylenglycolbis(2-mercaptoethyl)ether eingesetzt werden.

12. Verfahren nach Anspruch 8, **dadurch gekennzeichnet, dass** Vorpolymerisate aus einem oder mehreren Polyepoxyden und einer oder mehreren polyfunktionellen Estern der Mercaptopropionsäure oder Vorpolymerisate aus einem oder mehreren Polyepoxyden und einer oder mehreren Bis-thiol-Verbindung ausgewählt aus der Gruppe bestehend aus Bis(2-mercaptoethyl)ether, Diethylenglycol-bis(2-mercaptoethyl)ether, 3,7-Dithia-1,9-nonandithiol und 1,4-Butanediolbis(thioglycolat) jeweils im Verhältnis von 1 : 0,05 bis 0,05 : 1 gemischt werden.

13. Verfahren nach Anspruch 8, **dadurch gekennzeichnet, dass** die Oligoharnstoffe im Amingemisch
a) in situ durch Umsetzung mit aliphatischen, cycloaliphatischen oder aralphatischen Diisocyanaten erzeugt werden;
b) durch Aminolyse von Polyurethanen, insbesondere von Kaltform-Weichschaumstoffen, gewonnen werden; oder
c) durch Aminolyse von Polyurethan-Vorpolymerisaten erhalten werden.

14. Verfahren nach Anspruch 8, **dadurch gekennzeichnet, dass** das Amingemisch aus mindestens einem primären Diamin und mindestens einem sekundären Mono- oder Diamin besteht.

15. Verfahren nach Anspruch 8, **dadurch gekennzeichnet, dass** als weitere Komponenten nanoskalige feste Materialien eingesetzt werden.

## Claims

1. A two-component epoxy system, comprising:
a prepolymer consisting of 75 to 99.5 parts of a diepoxy and/or polyepoxy and 0.5 to 25 parts of a dimercapto and/or polymercapto compound;
an amine mixture of 5 to 25 parts of a mono-sec-amine or di-sec-amine and 75 to 95 parts of one or more primary diamines and/or polyamines with 0.1 to 20 wt% of nanoscale oligoureas dispersed therein; and
optionally, further solid or liquid additives.

2. The two-component epoxy system according to Claim 1, **characterized in that** the dimercapto and/or polymercapto compounds for producing the prepolymer are selected from the group consisting of esters of thioglycolic acid, thioacetic acid or mercaptopropionic acid with aliphatic hydroxy compounds that have at least two hydroxy groups.

3. The two-component epoxy system according to Claim 1, **characterized in that** the dimercapto and/or polymercapto compounds are selected from the group consisting of 3,6-dioxa-1,8-octanedithiols, bis(2-mercaptoethyl)ether and diethyleneglycol-bis(2-mercaptoethyl)ether.

4. The two-component epoxy system according to Claim 1, **characterized in that** the prepolymer is made by reacting (a) one or more polyepoxies with one or more polyfunctional esters of mercaptopropionic acid or (b) one or more polyepoxies with one or more bis-thiol-compounds selected from the group consisting of bis(2-mercaptoethyl)ether, diethyleneglycol-bis(2-mercaptoethyl)ether, 3,7-dithia-1,9-nonanedithiol and 1,4-butanediol-bis(thioglycolate), in each case in a ratio of 1 : 0.05 to 0.05 : 1.

5. The two-component epoxy system according to Claim 1, **characterized in that** the oligoureas in the amine mixture are produced by
a) reaction in situ with aliphatic, cycloaliphatic or araliphatic diisocyanates;
b) solvolysis of polyurethanes; or
c) aminolysis of polyurethane prepolymers.

6. The two-component epoxy system according to Claim 1, **characterized in that** the amine mixture consists of at least one primary diamine and at least one secondary monoamine or diamine.

7. The two-component epoxy system according to Claim 1, **characterized in that** the additives include nanoscale solid materials.

8. A method for producing coatings, encapsulants or sealants, **characterized in that** a prepolymer consisting of 75 to 99.5 parts of a diepoxy and/or polyepoxy and 0.5 to 25 parts of a dimercapto and/or polymercapto compound is reacted with
an amine mixture of 5 to 25 parts of a mono-sec-amine or di-sec-amine and 75 to 95 parts of one or more primary diamines and/or polyamines with 0.1 to 20 wt% of nanoscale oligoureas dispersed therein
and in the presence, optionally, of further solid or liquid additives, with shaping.

9. The method according to Claim 8, **characterized in that** mixtures of epoxy compounds are reacted at temperatures of 10°C to 70°C with one or more polymercapto compounds to form a storage-stable prepolymer.

10. The method according to Claim 9, **characterized in that** esters of thioglycolic acid, thioacetic acid or mercaptopropionic acid with aliphatic hydroxy compounds that have at least two hydroxy groups are used as the dimercapto and/or polymercapto compounds.

11. The method according to Claim 9,
**characterized in that** 3,6-dioxa-1,8-octanedithiols, bis(2-mercaptoethyl)ether or diethyleneglycol-bis(2-mercaptoethyl)ether are used as the dimercapto and/or polymercapto compounds.

12. The method according to Claim 8, **characterized in that** prepolymers consisting of one or more polyepoxies and one or more polyfunctional esters of mercaptopropionic acid or prepolymers consisting of one or more polyepoxies and one or more bis-thiol compounds selected from the group consisting of bis(2-mercaptoethyl)ether, diethyleneglycol-bis(2-mercaptoethyl)ether, 3,7-dithia-1,9-nonanedithiol and 1,4-butanediol-bis(thioglycolate), in each case in a ratio of 1 : 0.05 to 0.05 : 1, are mixed.

13. The method according to Claim 8, **characterized in that** the oligoureas in the amine mixture
a) are produced by reaction in situ with aliphatic, cycloaliphatic or araliphatic diisocyanates;
b) are obtained by aminolysis of polyurethanes, in particular cold-cure flexible foams; or
c) are obtained by aminolysis of polyurethane prepolymers.

14. The method according to Claim 8, **characterized in that** the amine mixture consists of at least one primary diamine and at least one secondary monoamine or diamine.

15. The method according to Claim 8, **characterized in that** nanoscale solid materials are used as further components.

## Revendications

1. Système époxy à deux composants, comprenant :
un prépolymère de 75 à 99,5 parties d'un di- et/ou polyépoxyde et de 0,5 à 25 parties d'un composé di- et/ou polymercapto ;
un mélange d'amines de 5 à 25 parties d'une mono- ou d'une diamine secondaire et de 75 à 95 parties d'une ou plusieurs di- et/ou polyamines primaires dans lesquelles de 0,1 % à 20 % en poids d'oligo-urées nanométriques sont dispersées ; et
alternativement, d'autres additifs solides ou liquides.

2. Système époxy à deux composants selon la revendication 1, **caractérisé en ce que** les composés di- et/ou polymercapto pour la fabrication du prépolymère sont sélectionnés parmi le groupe se composant d'esters de l'acide thioglycolique, de l'acide thioacétique ou de l'acide mercaptoproprionique avec composés hydroxylés aliphatiques, lesquels présentent au moins deux groupes hydroxyles.

3. Système époxy à deux composants selon la revendication 1, **caractérisé en ce que** les composés di- et/ou polymercapto sont sélectionnés parmi le groupe se composant de 3,6-dioxa-1,8-octanedithiols, bis(2-mercaptoéthyl)éthers et diéthylèneglycol-bis(2-mercaptoéthyl)éthers.

4. Système époxy à deux composants selon la revendication 1, **caractérisé en ce que** le prépolymère est fabriqué par la conversion de (a) un ou plusieurs polyépoxydes avec un ou plusieurs esters polyfonctionnels de l'acide mercaptoproprionique ou (b) un ou plusieurs polyépoxydes avec un ou plusieurs composés bis-thiols, sélectionnés parmi le groupe se composant de bis(2-mercaptoéthyl)éthers, diéthylèneglycol-bis(2-mercaptoéthyl)éthers, 3,7-dithia-1,9-nonanedithiols et 1,4-butanediol-bis(thioglycolates), respectivement dans un rapport de 1:0,05 à 0,05: 1.

5. Système époxy à deux composants selon la revendication 1, **caractérisé en ce que** les oligo-urées dans le mélange d'amines sont fabriquées par
a) transformation in situ avec des diisocyanates aliphatiques, cycloaliphatiques ou araliphatiques ;
b) solvolyse de polyuréthanes ; ou
c) aminolyse de prépolymères de polyuréthane.

6. Système époxy à deux composants selon la revendication 1, **caractérisé en ce que** le mélange d'amines se compose d'au moins une diamine primaire et d'au moins une mono- ou diamine secondaire.

7. Système époxy à deux composants selon la revendication 1, **caractérisé en ce que** les additifs comprennent des matières solides nanométriques.

8. Procédé pour la fabrication de revêtements, de matières de scellement ou de matières d'étanchéité **caractérisé en ce qu'**un prépolymère de 75 à 99,5 parties d'un di- et/ou polyépoxyde et de 0,5 à 25 parties d'un composé di- et/ou polymercapto, avec
un mélange d'amines de 5 à 25 parties d'une mono- ou d'une diamine secondaire et de 75 à 95 parties d'une ou plusieurs di- et/ou polyamines primaires dans lesquelles de 0,1 % à 20 % en poids d'oligo-urées nanométriques sont dispersées
ainsi que, le cas échéant, en présence d'autres additifs solides ou liquides, est transformé avec mise en forme.

9. Procédé selon la revendication 8, **caractérisé en ce que** des mélanges de composés époxy sont transformés en un prépolymère stable au stockage par des températures de 10 °C à 70 °C avec un ou plusieurs composés polymercapto.

10. Procédé selon la revendication 9, **caractérisé en ce que** des esters de l'acide thioglycolique, de l'acide thioacétique ou de l'acide mercaptoproprionique avec composés hydroxylés aliphatiques, lesquels présentent au moins deux groupes hydroxyles, sont utilisés comme composés di- et/ou polymercapto.

11. Procédé selon la revendication 9,
des 3,6-dioxa-1,8-octanedithiols, des bis(2-mercaptoéthyl)éthers et des diéthylèneglycol-bis(2-mercaptoéthyl)éthers sont utilisés comme composés di- et/ou polymercapto.

12. Procédé selon la revendication 8, **caractérisé en ce que** des prépolymères d'un ou plusieurs polyépoxydes et d'un ou plusieurs esters polyfonctionnels de l'acide mercaptoproprionique ou des prépolymères d'un ou plusieurs polyépoxydes et d'un ou plusieurs composés bis-thiols, sélectionnés parmi le groupe se composant de bis(2-mercaptoéthyl)éthere, diéthylèneglycol-bis(2-mercaptoéthyl)éthers, 3,7-dithia-1,9-nonanedithiols et 1,4-butanediol-bis(thioglycolat) sont mélangés respectivement dans un rapport de 1:0,05 à 0,05: 1.

13. Procédé selon la revendication 8, **caractérisé en ce que** les oligo-urées dans le mélange d'amines
a) sont produites par transformation in situ avec des diisocyanates aliphatiques, cycloaliphatiques ou araliphatiques ;
b) sont obtenues par aminolyse de polyuréthanes, en particulier de mousses souples à froid ; ou
c) sont obtenues par aminolyse de prépolymères de polyuréthane.

14. Procédé selon la revendication 8, **caractérisé en ce que** le mélange d'amines se compose d'au moins une diamine primaire et d'au moins une mono- ou diamine secondaire.

15. Procédé selon la revendication 8, **caractérisé en ce que** des matières solides nanométriques sont utilisées comme autres composants.
